# EUROPEAN PATENT APPLICATION

(11) **EP 2 738 547 A1**
(43) Date of publication of application: **04.06.2014**
(21) Application number: 12075134.2
(22) Date of filing: 29.11.2012
(51) Int. Cl.: G01N 21/77

(54) **Optical sensor arrangement and method for measuring an observable**

(71) Applicant: Fraunhofer-Gesellschaft zur Förderung der angewandten Forschung, 80686 München (DE)
(72) Inventor: Heidrich, Helmut, 12357 Berlin (DE); Lützow, Peter, 10781 Berlin (DE); Pergande, Daniel, 12203 Berlin (DE); Zamora Gomez, Alethea Vanessa, 10117 Berlin (DE)
(74) Representative: Pfenning, Meinig & Partner GbR

(57) **Abstract**

The invention relates to an optical sensor arrangement (1) for measuring at least two observables, the arrangement comprising:
a light generation circuit (2) including a light source for generating light of a frequency including a first and second light component;
an optical resonance circuit (4) including at least a first and a second optical resonator (41-44), each of said optical resonators comprising an entry port (51-54) for coupling light into the optical resonator and a drop port (61-64) for decoupling light from the optical resonator,
wherein the light generation circuit is optically coupled to the entry port of each of the at least two optical resonators; and
a detector unit (7) for detecting the light including at least one photosensitive element,
wherein the detector unit is optically coupled to the drop port of each of the at least two optical resonators and wherein the first light component arrives at the detector unit passing the first optical resonator and the second light component arrives at the detector unit passing the second optical resonator.

## Description

The invention relates to an optical sensor arrangement for measuring an observable, the arrangement including a light generation circuit, an optical resonance circuit, and a detector unit for detecting light generated by the light generation circuit.

Optical sensor arrangements are used for measuring at least one observable, wherein the observable can be the presence of a specific substance or other physical properties, such as changes in pressure or temperature. Some optical sensor arrangements include optical resonance circuits, which include at least one optical resonator, such as an optical microring resonator, as a very sensitive optical sensor type for sensing the observable. In many cases the resonator is exposed to a medium such as a gas or a liquid, where the medium may carry a chemical compound, a biological substance, or the like, to be measured by the optical sensor arrangement. In several cases the optical resonator is covered by a covering material which includes an active material such that molecules of the substance to be detected can dock at the active material.

Optical resonators have the property of allowing light of a specific frequency that represents a resonance frequency of the optical resonator (i.e., the wavelength of the light multiplied by an integer and the effective refractive index correspond to the optical length of the resonator) to enter the optical resonator while light of other wavelengths does not enter the resonator.

Many optical resonators have the property that when a physical condition, such as temperature or pressure, of the surrounding medium changes or a substance, such as a chemical or biological compound or substance, attaches to at least one of the surfaces of the resonator, the optical length of the optical resonator changes with it, i.e., the resonance frequency of the optical resonator is shifted. The shift in resonance frequency or optical length can be used to determine whether the observable to be sensed has changed or is found in the medium.

Often it is of interest to not only detect a single observable but to measure at least two observables simultaneously. An exemplary optical sensor for measuring several observables can be found in document WO 2011/000494. Said optical sensor comprises a plurality of optical resonators, the resonance frequency of which can be individually adjusted by a tuning device. A light generation circuit generates light and passes the light by the optical resonators such that light traveling through the waveguide may couple to the optical resonators through its evanescent field. Light of a resonance frequency of at least one of the resonators is absorbed by said resonator, and the detector unit detects light of a reduced intensity due to the absorption. When a substance docks at the active layer of the optical resonator, the resonance frequency of said resonator is shifted and, hence, the resonance frequency is shifted as well. This shift can be detected by the detector unit, and thus the presence of an observable can be determined. By choosing several resonators each, for example specific to a different substance, a plurality of substances can be detected.

It is the objective technical problem to be solved by the claimed subject-matter to design an optical sensor arrangement for measuring at least two observables and provide an alternative solution to the optical sensor arrangements found in the prior art.

The problem may be solved by an optical sensor arrangement including the features of claim 1 and by a method for measuring at least two observables according to the features of claim 16. Further embodiments, developments, or alternatives of the invention may be accomplished by basing them on features of the dependent claims or the alternatives presented hereafter. However, different embodiments of an optical sensor arrangement may leave out specific features from claim 1 or include alternatives to features found in claim 1.

The optical sensor arrangement for measuring at least two observables includes a light generation circuit including a light source for generating light including a first and second light component. Said light generation circuit is coupled to an optical resonance circuit including at least a first and a second optical resonator, each of said optical resonators comprising an entry port for coupling light into the optical resonator. Furthermore, according to the invention the optical resonance circuit also includes a drop port for decoupling light from the optical resonator, which is preferably different from the entry port. In the sense of this application, an entry port or a drop port is defined as a neighborhood between an optical path, such as a waveguide, and an optical resonator, such as a microring resonator, in which light traveling within either the waveguide or the optical resonator can enter the other through the evanescent field of the light component.

The optical resonators each include an optical length which is variable depending on one of the at least two observables. Furthermore, the arrangement includes a detector unit for detecting the light including at least one photosensitive element. The detector unit is optically coupled to the drop port of each of the at least two optical resonators. Hence, light emitted from the light generation circuit travels along an optical path and passes the entry ports of each of the at least two optical resonators, and only when the light has a frequency corresponding to one of the resonance frequencies of the at least two optical resonators, enters and exits the resonator through the drop port and travels into the detector unit. By coupling the detector unit to the drop ports of the optical resonators, the detector unit detects an intensity maximum at optical resonance frequencies of the at least two optical resonators. Since the detector unit only receives a signal when a resonance criterion is met, i.e., light passes through at least one of the optical resonators and exits at the drop port to be detected at the detector unit, the detector only receives relevant data. In contrast to the prior art where the detector only receives data which is not relevant and has to determine the resonance frequencies from an intensity minimum (i.e., from data not received), the accuracy of the measurement can be improved or the complexity of the data analysis can be simplified.

The optical sensor arrangement may also include a control unit for selectively modulating the first optical length, the second optical length, an amplitude of the first light component or an amplitude of the second light component. Since the optical sensor arrangement includes several optical resonators and said optical resonators can be used for measurements of different observables, it is of interest to separate the signals from the first and second optical resonators. By specifically modulating either the optical lengths of the first and second optical resonators by a time-dependent signal specific to an optical resonator, the signal received at the detector unit also includes said time dependence and thus allows to determine whether the detected signal originates from the first or second optical resonator. If the first and second optical resonators are modulated with different time dependencies, it can be easily determined which signal received at the detector corresponds to which optical resonator.

Supposing that the first light component is of a resonance frequency specific to the first optical resonator and the second light component is of a resonance frequency specific to the second optical resonator, modulating the amplitudes of the first and second light components in a resonator-specific manner also allows to determine whether a signal received at the detector unit originates from the first optical resonator or the second optical resonator. Depending on the chosen architecture of the optical sensor arrangement, also the lengths of the optical paths to and from the optical resonance circuits may be altered individually for each optical resonator in order to identify signals received at the detector unit as originating from the first or second optical resonators or their corresponding paths.

The amplitude of the first and second light components can be modulated, and it is also within the scope of this application that the modulation is such that the amplitude equals zero, i.e., the control unit for modulating the amplitudes of the light components is a switch which may switch on and off with a specific time variance. Again, signals arriving at the detector unit can be identified as originating from the first or second optical resonator or the paths to and from the optical resonance circuit based on the switching frequency.

In a base state of the first and second optical resonators, said optical resonators may have an identical or different optical length. A base state in the sense of this application is understood as the state in which the resonators are not exposed to the observables to be detected.

In an active state, i.e., a state in which the optical sensor arrangement is exposed to a medium or gas which may include the observables to be detected, the observable, such as a change in temperature, a change in pressure, or a specific biological or chemical compound or substance in the medium, affects the optical resonators and causes a change in the effective refractive index and thus a change in their optical length, thereby changing the resonance frequencies. In other words, the shift in resonance frequencies from the base state to the active state, in which a substance to be detected is part of the medium, has the effect that light of, for example, the first component which passes the first optical resonator in a base state no longer passes said optical resonator in its active state. Be detuning the frequency of the first light component, the active state of the resonance frequency of the first optical resonator can be determined, and a signal received at the detector unit can again be identified by the modulation frequency imposed by the control unit.

Even though detuning the light source is a method for determining the frequency shifts, the presence of a substance can also be identified by tuning the first and second optical resonators in their base state such that a signal is received at the detector unit. Each signal is modulated by a specific frequency identifying the light as having passed through the first or second optical resonator. If one of the signals now disappears, it can also be assumed that the presence of an observable has been detected.

It is also sufficient to only modulate one of the optical resonators or the paths leading to the optical resonators, since one of the first and second optical resonators can be assumed to be modulated with a modulation frequency of zero.

Further embodiments are explained in the dependent claims. As mentioned, the optical lengths of the first and second optical resonators may be different in a base state. It is very difficult to build optical resonators which have the exact same resonance frequencies. Hence, it is easier to construct the optical sensor arrangement by not imposing the restriction that the resonance frequency of the first and second optical resonators is identical. If said optical lengths are different in a base state, the first and second light components can be interpreted to be light of a first and second frequency, respectively. The first component having the first frequency corresponds to a resonance frequency of the first optical resonator, and the second light component having a second frequency corresponds to the resonance frequency of the second optical resonator.

In a different embodiment the first and second optical lengths of the first and second optical resonators when in an active state are also different.

In order to simplify the arrangement, a light generation circuit may include a tunable light source for generating light of different frequencies. In one embodiment an interval of frequencies can be scanned by the light source periodically, and thus, at a specific time, light of a first frequency, i.e., the first light component, and, at a later time, light of a second frequency, i.e., the second light component, is generated.

In a first embodiment, the light generation is coupled to the first and second optical resonators by a single optical waveguide. Said embodiment allows for a simple construction. However, said construction makes it more difficult to individually modulate the amplitude of the first or second light component. A device for modulating the amplitude can be placed in the optical waveguide between the first and second optical resonators, i.e., light arriving at the first optical resonator has a first amplitude, and said amplitude is reduced or in specific examples enhanced and now passes by the second optical resonator.

In contrast, the first optical resonator may be coupled to the light generation circuit by a first optical waveguide, and the second optical resonator may be coupled to the light generation circuit by a second optical waveguide. Each waveguide may be coupled to its own light source, or a single light source may be used, the light of which is split by a beam splitter or an optical coupler. Using an optical path for each of the first and second optical resonators allows to individually modulate optical lengths of the first and second optical paths in some embodiments. Furthermore, a device for modulating the amplitude may be placed in each optical path. This allows to individually modulate the amplitude of the light component in each optical path by a different time dependence. A modulator can, for example, be a waveguide-integrated PIN diode used as an electro-optical modulator, a Mach-Zehnder based modulator, an electro-optical amplitude modulator, a light chopper, a mode filter or similar devices.

In a further arrangement, the detector unit is coupled to the first and second optical resonators by a single optical waveguide. This again allows for a simple construction of the arrangement. The optical waveguide passes each drop port of the first and second optical resonators and allows light exiting at said drop ports to be detected at the detector unit.

In contrast, the first optical resonator may be coupled to the detector unit by a third optical waveguide, and the second optical resonator may be coupled to the detector unit by a fourth optical waveguide. This case is similar to the case where the light generation circuit couples to the first and second optical resonators through an individual optical path. In particular, it is possible to modulate light after said light has passed through the first or second optical resonator. This may be advantageous since light passing through the optical resonators need not be modulated beforehand and the intensity of the signal may be improved. The third and fourth optical waveguides may be coupled by an optical coupler situated between the optical resonance circuit and the detector unit, allowing the use of a smaller detector unit.

An alternative to using a coupler coupling the third and fourth optical waveguides (or further waveguides) is using a camera, several photo detector units or a single photo detector unit with a photosensitive area large enough to accommodate all light beams emitted from the third, fourth and further waveguides. Using a camera, which may include a lens system, has the advantage that the signals received by the camera from the different waveguides may be detected by different pixels of the photosensitive chip (f.e. a CMOS or a CCD, wherein the plurality of pixels corresponds to a plurality of photosensitive elements of the detector unit) of the camera. A control unit of the camera can successfully separate the signals due to their local distribution on the chip, identifying which signal is received from which optical resonator. Using a camera can have the further advantage that a control unit for selectively modulating the first or second optical length or the amplitude of the first or second light component is not necessary, since the local distribution allows a separation of signals. However, the camera can also be an additional means to confirm that the signals separated by a, f.e., lock-in amplifier are indeed from a particular resonator. A camera, particularly for detecting wavelengths used in telecommunications, f.e. 1.5 µm, can be quite costly though. Using several photo sensitive elements, each coupled to one of the third, fourth or further waveguides also results in a separation of signals without the need for a control unit for selectively modulating the first or second optical length or the amplitude of the first or second light component. However using several photosensitive elements may be more costly and require a bigger substrate for mounting the optical sensor arrangement on a single substrate.

Even though the optical sensor arrangement described so far only comprises a first and a second optical resonator, further optical resonators may be employed. Said resonators may each have their own individual optical waveguide from the light generation or to the detector unit or may share an optical path with another optical resonator. It is also possible to connect a few optical resonators by a single optical waveguide while further optical resonators each have their own optical path.

When more than two optical resonators are used, each resonator can be configured to detect a different observable. Each optical resonator can be constructed such that it has a different optical length in its base state from the other resonators. Consequently, the light generation circuit (besides the first and second light component) should emit further components, each further component matching a resonance frequency or optical length of one of the further optical resonators. In case an interval of frequencies is scanned, the further light components may be scanned at different times than the first and second light components.

Microring resonators can be used as optical resonators. However, other types of resonators may be employed, such as Fabry-Perot resonators or photonic crystal resonators.

In a further embodiment the optical sensor arrangement includes a laser in the light generation circuit, where the laser is tunable. Further lasers may be employed. In particular, a distributed feedback (DFB) laser may be used. The laser can be tunable.

In order to ensure that the first and second optical resonators are specific to the chosen observable, each resonator may comprise an active layer for the selective accretion of one or more substances to be detected. The active layer may be exclusively specific to molecules or a group of specific substances.

The optical sensor arrangement may further include an amplifier as part of the detector unit, preferably a differential amplifier for evaluating output signals of the at least one light-sensitive element. To separate the signals, a lock-in amplifier may be used. The signal of the first sensitive element may be filtered by a signal of the modulation frequency for each optical resonator. Due to a periodicity of the modulation signal, the different components which are not modulated by the modulation frequencies can be eliminated, and only the signal corresponding to a specific optical resonator or its corresponding optical path is separated.

Further, a second detector unit can be used with the optical sensor arrangement. The detector unit may be situated at an entry side of the first and second optical resonators, which is the side where the entry ports of said resonators are situated. In contrast to the first detector unit, the second detector unit then does not measure a transmission spectrum of the optical resonators, but an absorption spectrum. The absorption spectrum lacks intensities in frequencies, where the first or second optical resonators are resonant. The second detector unit can be used to verify results of the first detector unit or serve as a redundant detector unit used when the first detector unit fails.

Further details regarding optical sensor arrangements are found in the following description of exemplary embodiments and the drawings illustrating various aspects of the exemplary embodiments. It is pointed out that features not claimed in the independent or dependent claims but shown in the drawings and described in the corresponding description are, each in its own right, also features of this application. They may be claimed without necessarily including all features shown or described in the exemplary embodiment. Consequently, any single feature shown in a specific embodiment may be claimed individually. In particular, features described in connection with the optical sensor arrangement may be claimed for the disclosed method and vice versa.

The exemplary embodiments of this application are subsequently explained with reference to Figures 1-4.
- Figs. 1a and 1b: represent a simple exemplary embodiment of an optical sensor arrangement and illustrate the data analysis;
- Figs. 2a - 2c: show further embodiments of an optical sensor arrangement;
- Fig. 3: shows a further example of an optical sensor arrangement; and
- Fig. 4: illustrates an exemplary embodiment of an optical sensor arrangement with Fabry-Perot resonators.

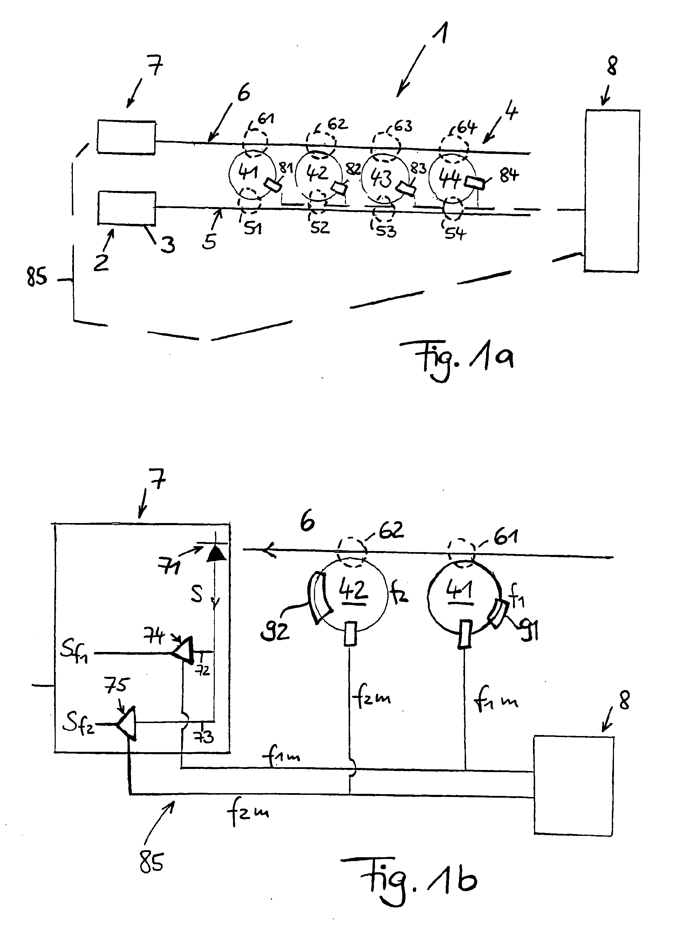

Figure 1 discloses an optical sensor arrangement 1 including a light generation circuit 2 which includes a DFB laser 3. Furthermore the arrangement 1 includes an optical resonance circuit 4 which is optically coupled to the light generation circuit 2 by a single optical waveguide 5. The arrangement further includes a single optical waveguide 6 which connects the optical resonance circuit 4 to a detector unit 7. The arrangement further includes a control unit 8 for modulating the optical lengths of the optical resonators of the optical resonance circuit. Optionally, a further, second, detector unit can be placed along waveguide 5 at the side opposite light generation circuit 2.

The DFB laser 3 is tunable, i.e., can scan through an interval of frequencies where the interval of frequencies is chosen such that at least one resonance frequency of each of the optical resonators of the optical resonance circuit is emitted during the interval. The optical resonance circuit 4 shown in Fig. 1 includes four different optical microring resonators 41-44. In the present embodiment, the optical lengths in a base state of the arrangement 1 are different. However, it is also possible to use different optical resonators 41-44 which have identical optical lengths in a base state. Furthermore several, but not all, optical resonators may have the same wavelength while others have different wavelengths.

The optical resonators 41-44 are optically coupled to the single optical waveguide 5 through entry ports 51-54. The entry ports are defined by a region in which the single optical waveguide and parts of each of the optical resonators 41-44 are situated so closely next to each other that an evanescent field of light traveling through the single optical waveguide may couple to the optical resonators. Each of the optical resonators 41-44 in addition to an entry port has a drop port 61-64 which optically couples the optical resonators to the single optical waveguide 6. The drop port in the present embodiment is a region in which the optical waveguide is so close to the optical resonator that the evanescent field of a constructively interfering light wave traveling inside the optical resonator may couple into the single optical waveguide. Light traveling through the single optical waveguide 6 is then directed to a detector unit 7 which includes at least one photosensitive element. The light generation circuit 2, the optical resonance circuit 4, as well as the optical waveguides and the detector unit may be arranged on a single semiconductor substrate such as a silicon substrate. However, the different components of the arrangement, for example the light generation circuit and the optical resonance circuit, may also be arranged on separate substrates and only be coupled by the optical waveguides.

The control unit 8 includes a CPU or a microcontroller or a field programmable gate array and is connected to a modulation device 81-84 where each of the modulation devices is configured to modulate the optical length of the corresponding optical resonator. The control unit 8 may include several wave generation circuits for imposing a modulation on the optical length of the optical resonators. The devices 81-84 for modulating the optical length of the resonator can be heating elements, such as heating wires or heating layers for rapid setting and adjusting the temperatures of the resonators, or electrical contacts for applying an electrical field to the respective resonator. Both, changes in temperature or in the electric field, may change the effective refractive index and can be used for modulating the optical length. As long as a heating element or electrical contacts are, for example, situated in the immediate vicinity of a coupling range between the resonator and the waveguide, also the coupling between ring resonator and waveguide can be influenced alternatively or additionally.

The control unit 8 is further connected to the detector unit 7 via connection 85. The connection 85 transmits data regarding the modulation frequencies or signals mirroring the modulation signals to detector unit 7.

As mentioned above, each of the optical resonators 41-44 in the specific embodiment of Fig. 1 has a different optical length in a base state. In order to use the sensor arrangement for measuring at least two observables, each of the optical resonators is covered by a material that allows the selective accretion of the substance to be detected by said ring resonator. The active layer may be a coating which specifically targets specific biological substances or groups of substances or specific chemical substances or compounds. While each of the optical resonators may include a coating of a material for selectively accreting a substance, some of the optical resonators can be configured for detecting, for example, changes in temperature or changes in pressure. While in the example of Figs. 1 each optical resonator includes an active layer and each of the optical resonators is exposed to a medium during measuring, the optical sensor arrangement may also include at least one optical resonator which is encapsulated in the sense that it is not exposed to the substances to be detected or to the observables to be detected. Said encapsulated resonator may be used as a gauge resonator.

Another option for coupling the waveguides and each of the optical resonators is to use a Mach-Zehnder interferometer.

The waveguides are further configured such that they are a polarization-maintaining single mode waveguide. However, different waveguides carrying not only a TE or TM mode can be employed.

Figure 1b discloses a subunit of the optical arrangement 1 illustrating how the signals passing through different optical resonators may be identified in the detector unit. In Fig. 1b only the first optical resonators 41 and 42 are shown. Each optical resonator may be affected by modulation devices 81 and 82, which in their present embodiments are devices for modulating an electrical field. The detector unit 8 includes a microcontroller for controlling the modulation frequencies. Since the control unit is an electronic unit, the modulation frequencies are much lower than the frequencies of the light traveling in the optical resonators, i.e., the modulation frequencies and the frequencies of the light passing therethrough may be different by several orders of magnitude.

In the following, it is assumed that light generated by the light generation circuit is such that during a time interval at least one wavelength of the emitted light, the first light component, has a frequency of f₁ corresponding to a resonance frequency of the first optical resonator 41. Furthermore, the second light component has a wavelength corresponding to a frequency f₂, which is a resonance frequency of the second optical resonator. The frequencies f₁ and f₂ are different from each other.

The control unit 8 is configured to modulate the optical length of the first and second resonators by a modulation frequency f₁ₘ for the first optical resonator and f₂ₘ for the second optical resonator. The control unit also forwards the signal carrying the modulation frequencies f₁ₘ and f₂ₘ, respectively, through the connection 85 to the detector unit 7. Light traveling in the optical resonators is decoupled from the optical resonators via the drop ports 61 and 62 and travels along the optical waveguide 6 to the photosensitive element 71 of the detector unit 7. The photosensitive element 71 detects a signal S which is forwarded to connections 72 and 73. Connection 72 is the "in" port for an amplifier 74. The amplifier 74 is also fed with a signal of the modulation frequency f₁ₘ as a reference signal. The resulting signal is signal S_{f1} since frequencies other than a signal modulated by the frequency f₁ₘ are canceled in the amplifier 74. Hence, signal S_{f1} corresponds to a signal which is due to light entering and exiting the first optical resonator 41. Correspondingly, connection 73 enters an amplifier 75 which as a reference also receives a signal carrying the modulation frequency f₂ₘ, resulting in a signal S_{f2} which represents light passing the second optical resonator.

If the spectral content of signals S_{f1} and S_{f2} changes from the base state of the arrangement to the active state of the arrangement, it can be assumed that a substance which specifically docks to either the active layer 91 or 92 (which are shown schematically only), respectively, is present. Since the frequency of the light traveling through the arrangement can be identified, a shift in resonance frequencies due to the presence of an observable can be determined.

In order to exclude that changes in the optical lengths of the optical resonators are due to external circumstances and not due to the observable to be detected, a gauge optical resonator can be used which is encapsulated and thus is not exposed to the observable to be detected.

Even though the amplifiers 74 and 75 are shown as part of the detector unit 7, they can also easily be included in the control unit 8. The signals S_{f1} and S_{f2} may be configured to be further analyzed by either the control unit 8 or an external data processing machine, such as a computer.

The embodiment shown in Figure 1a comprises a single optical waveguide for both delivering the light to the optical resonator and forwarding the light from the optical resonators to the detector unit. However, it is also possible to transport or guide light traveling to and from the optical resonators by individual optical paths.

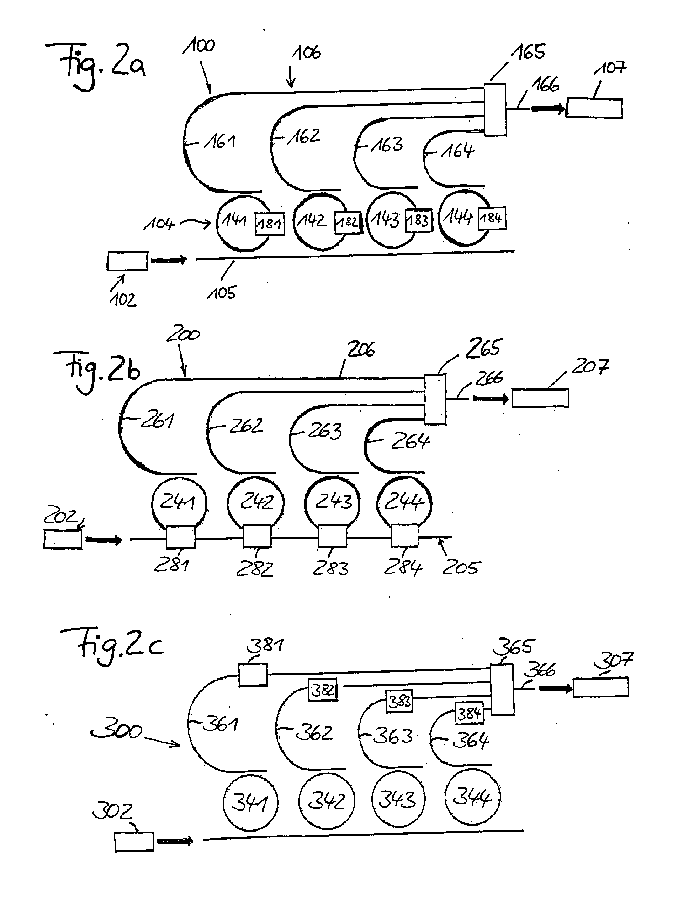

Figures 2a - 2c illustrate several examples of an optical sensor arrangement including individual optical paths in the form of individual optical waveguides forwarding light from an optical resonator to the detector unit.

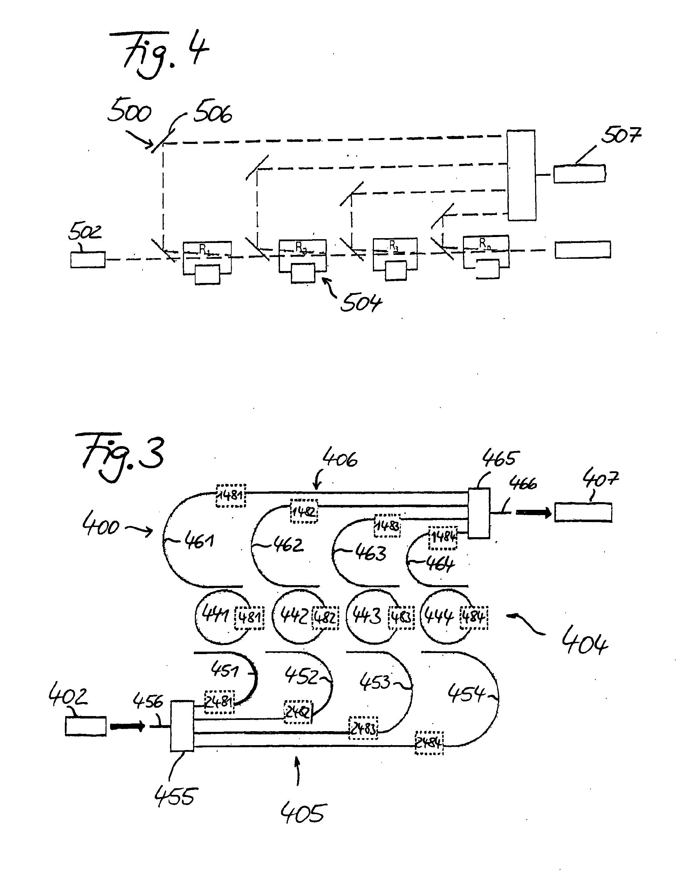

The optical sensor arrangements 100, 200, and 300 of Figs. 2a - 2c include components similar to the components described in the description of the embodiment of Fig. 1a. In particular, the embodiments found in Figs. 2a - 2c signify components to be similar to the components of optical sensor arrangement 1 by simply adding 100, 200, or 300, respectively, to the respective component shown in Fig. 1a. For example, the optical resonance circuit 4 of the embodiment of Fig. 1a can be identified with optical resonance circuit 104 in the optical sensor arrangement 100, with optical resonance circuit 204 in the optical sensor arrangement 200, with optical resonance circuit 304 in the optical sensor arrangement 300, with optical resonance circuit 404 in Fig. 3, and with optical resonance circuit 504 in Fig. 4. If components of the following embodiments are designed differently, it will be mentioned specifically.

Optical sensor arrangement 100 includes a light generation circuit 102 and a single optical waveguide 105 which couples to an optical resonance circuit 104 through entry ports 151-154. The optical resonance circuit 104 includes four optical resonators 141-144. Optical resonator 141 is used as a gauge resonator and is encapsulated from the environment and is thus not exposed to any of the observables for whose detection the optical resonators 142-144 are specifically designed.

Each of the optical resonators 142-144 is a microring resonator coated with a specific active layer for selectively accreting a group of substances, the detectable group of substances of each of the optical resonators being different. The optical lengths of the optical resonators 141-144 are different such that the intensities of the light being generated by the light generation circuit 102 in the respective resonance frequency of each optical resonators are almost identical.

The optical resonators 141-144 include a drop port for decoupling from the optical resonators 141-144 into their respective optical waveguides 161-164, respectively. The individual waveguides 161-164 lead to an optical coupler 165 such as a 3db or 10db coupler and are continued as a single optical path 166 to detector unit 107. Choosing individual optical waveguides is an arrangement which is more complex but which has a higher sensitivity since light exiting any one optical resonator can be of the same frequency as light exiting another optical resonator and the intensity of the signal in each waveguide can be almost equal. As described in connection with the embodiment of Fig. 1a, each of the optical resonators 141-144 may be modulated by a modulation device 181-184 coupled to a control unit, which in this embodiment is part of the detector unit 107.

The optical sensor arrangement 200 of Fig. 2b differs from the optical sensor arrangement 100 shown in Fig. 2a by using a different modulation device 281-284. The modulation device in each case is an electrical contact and by modulating the electric field of said contact the coupling strength between the ring resonator and the waveguide can be influenced and modulated. In this case the modulation is not a frequency modulation such as was the case in the optical sensor arrangements 1 and 100 but an amplitude modulation by varying the amplitude of the light which may couple into the optical ring resonators periodically.

In the optical sensor arrangement 300, the modulation devices 381-384 are no longer placed in the vicinity of the optical ring resonators but are placed in the individual optical waveguides 361-364. The modulation devices 381-384 are electro-optical amplitude modulators, which switch on and switch off light traveling through said waveguide with a specific frequency and specific interval lengths, the frequency and interval lengths being characteristic for the signal of each modulation device 381-384. In this sense, the modulation devices switch the amplitude of the light emitted from the optical resonators.

Each of the embodiments shown in Fig. 1a and Figs. 2a - 2c may employ a switch for a modulation. By replacing the electro-optical amplitude modulators 381-384 of the optical sensor arrangement 300 with modulation devices such as modulation devices 181-184, the optical length of each optical path 361-364 may be altered, thus changing the phase of the light traveling through said waveguide.

This is further illustrated in the embodiment of Figure 3.

Optical sensor arrangement 400 includes a light generation circuit 402 and several optical waveguides to guide light to the optical resonance circuit 404. Light emitted from the light generation circuit 402 enters an optical waveguide 456 and a decoupler 455 where the emitted light is fed into the four different optical waveguides 451-454. Each waveguide is configured such it couples to the respective optical resonators 441-444. Light exiting the optical resonators may enter individual waveguides 461-464 coupled by a coupler 465 and led by a single optical waveguide 466 to the detector unit 407. In the present embodiment, the optical waveguide structure 405 and the optical waveguide structure 406 both include a plurality of individual waveguides, the number of waveguides corresponding to the number of optical resonators used. However, it is also possible to only use, for example, individual waveguides for two of the four optical resonators and to supply light to the remaining optical resonators by a single optical waveguide.

As illustrated by the dotted lines in the embodiment of Fig. 3, a modulation device coupled to a control unit may be placed so as to influence the optical length of the resonator (for example, device 481 in the first optical resonator 441), the optical waveguide leading to the first optical resonator 441 or the waveguide 461 leading to the detector unit. While in the present example in connection with the first optical resonator three modulation devices 481, 1481, and 2481 are shown, in practice only one of those three devices will be realized in the embodiment. Whether the modulation device is for modulating the frequency or optical length of the entire optical path from the optical decoupler 455 to the optical coupler 465, or whether only the amplitude of the light is modulated or switched can be chosen based on the specific embodiment of the optical sensor arrangement. The remaining optical resonators 442 and 444 and their respective optical path from the first decoupler 455 to the coupler 465 may be configured as described in connection with the first optical resonator 441. However, the four different optical paths shown in the optical sensor arrangement 400 may use modulation devices in different areas. For example, modulation device 1481 of the first optical path is an amplitude modulation device, the modulation device employed in the arrangement for the second optical path is a modulation device of the second optical resonator 442, while the third modulation device employed in the optical path of the third optical resonator 443 is a light chopper (or alternatively an electro-optical amplitude modulator) in the form of the modulation device 2483. In other words, usually only one modulation device for an optical path including an optical resonator is used.

In the embodiments shown in Figs. 2 and 3, the coupler 165, 265, 365, 465 may be omitted. Instead, several photosensitive elements can be used, each photosensitive element capturing the light emitted from a single waveguide. Alternatively, a camera may be used allowing for local separation (spatial separation instead of ar in addition to time/frequency separation in multiplexing) of signals coming from each waveguide and assigning each separate signal to a particular resonator. When a camera or several photosensitive elements are use, the need for means for modulation, or a control unit configured to selectively modulate the signals is not necessary, since the different waveguides located at each waveguide coupled to the drop port of each resonator only carries the signal stemming from said resonator and the several waveguides or the camera can be used for separating the signals. All embodiments using individual waveguides for each resonator at their respective drop port can be designed this way and the means for modulation may be omitted.

A further embodiment based on the embodiment of Figure 3 may include an optical detector unit at each of the open ends of the waveguides 451-454, measuring an absorption spectrum of light having passed the resonators. The detectors may be used as a redundant measure for detecting the observables. Alternatively, the detector unit 407 may be omitted and only the detector units at the open ends of the waveguides 451-454 be used. In a further embodiment, the entire transmission spectrum measurement can be omitted, leaving a single light source, a plurality of optical paths and associated resonators, the open ends of the optical paths coupled to a detector unit. The detector units may also be replaced by a single or several cameras allowing for spatial separation of the signals from the separate waveguides.

Even though the embodiments discussed so far have been explained in the context of optical ring resonators, other resonators may be employed. Figure 4 discloses an optical sensor arrangement 500 including a light generation circuit 502 which includes an optical resonance circuit 504 including a plurality of Fabry-Perot resonators. Instead of optical waveguides, mirrors, for example mirror 506, are used to guide light to a detector unit 507. Each Fabry-Perot resonator may be designed to have a different optical length and may be actively influenced either mechanically or electrically. However, the sensor arrangement can be realized in the same manner as the ones discussed before.

## Claims

1. An optical sensor arrangement (1) for measuring at least two observables, the arrangement comprising:
a light generation circuit (2) including a light source for generating light of a frequency including a first and second light component;
an optical resonance circuit (4) including at least a first and a second optical resonator (41-44), each of said optical resonators comprising an entry port (51-54) for coupling light into the optical resonator and a drop port (61-64) for decoupling light from the optical resonator,
wherein a first optical length of the first optical resonator is variable depending on one of the at least two observables and a second optical length of the second optical resonator is variable depending on the other of the at least two observables, and
wherein the light generation circuit is optically coupled to the entry port of each of the at least two optical resonators; and
a detector unit (7) for detecting the light including at least one photosensitive element,
wherein the detector unit is optically coupled to the drop port of each of the at least two optical resonators and wherein the first light component arrives at the detector unit passing the first optical resonator and the second light component arrives at the detector unit passing the second optical resonator.

2. The optical sensor arrangement according to claim 1, the arrangement further comprising a control unit (8) configured to selectively modulate at least one of the following:
the first optical length, the second optical length, an amplitude of the first light component or an amplitude of the second light component.

3. The optical sensor arrangement according to any of the preceding claims, wherein in a base state of the optical resonance circuit the first optical length is different from the second optical length.

4. The optical sensor arrangement according to any of the preceding claims, wherein the light generation circuit is coupled to the first and second optical resonator by a single optical waveguide (5).

5. The optical sensor arrangement according to claims 1 through 3, wherein the first optical resonator is coupled to the light generation circuit by a first optical waveguide (451) and the second optical resonator is coupled to the light generation circuit by a second optical waveguide (452).

6. The optical sensor arrangement according to claim 5, wherein the first and second optical waveguides are decoupled by an optical coupler (455) situated between the light generation circuit and the optical resonance circuit.

7. The optical sensor arrangement according to any of the preceding claims, wherein the detector unit is coupled to the first and second optical resonator by a single optical waveguide (6).

8. The optical sensor arrangement according to any of claims 1 through 6, wherein the first optical resonator is coupled to the detector unit by a third optical waveguide (161) and the second optical resonator is coupled to the detector unit by a fourth optical waveguide (162).

9. The optical sensor arrangement according to claim 7, wherein the third and fourth optical waveguides are coupled by an optical coupler (165) situated between the optical resonance circuit and the detector unit.

10. The optical sensor arrangement according to any of the preceding claims, wherein the optical resonance circuit includes further optical resonators.

11. The optical sensor arrangement according to any of the preceding claims, wherein the optical resonators include one of a microring resonator, a Fabry-Perot resonator or a photonic crystal resonator.

12. The optical sensor arrangement according to any of the preceding claims, wherein the light generation circuit includes a single, tunable light source (3).

13. The optical sensor arrangement according to any of the preceding claims, wherein the light source is a laser, preferably a DFB laser.

14. The optical sensor arrangement according to any of the preceding claims, wherein the first and the second resonator each comprise an active layer (91, 92) for the selective accretion of one or more substances to be detected.

15. The optical sensor arrangement according to any of the preceding claims, wherein the detector unit includes an amplifier (73, 75), preferably a differential amplifier for evaluating output signals of the at least one light sensitive element (71).

16. A method for detecting at least one of at least two observables by means of an optical sensor arrangement of any of the preceding claims, wherein the first and second optical resonator are brought into contact with an medium to be analyzed and measuring an output signal of the at least one photosensitive element to determine whether an observable of or in the medium is detected.
